# EUROPÄISCHE PATENTSCHRIFT

(11) **EP 4 547 478 B1**
(45) Veröffentlichungstag und Bekanntmachung des Hinweises auf die Patenterteilung: **18.03.2026**
(21) Anmeldenummer: 23772152.7
(22) Anmeldetag: 12.09.2023
(51) Int. Cl.: B31F 1/20

(54) **VERFAHREN ZUR HERSTELLUNG EINER WELLPAPPENBAHN MITTELS EINER WELLPAPPENANLAGE, WELLPAPPENANLAGE, COMPUTERPROGRAMMPRODUKT**
METHOD OF PRODUCING A CORRUGATED BOARD WEB BY MEANS OF A CORRUGATOR, CORRUGATOR, CORRESPONDING COMPUTER PROGRAMME
PROCÉDÉ DE FABRICATION D'UNE FEUILLE DE CARTON ONDULÉ AU MOYEN D'UNE INSTALLATION DE CARTON ONDULÉ, INSTALLATION DE CARTON ONDULÉ, PROGRAMME INFORMATIQUE CORRESPONDANT

(30) Priorität: 14.09.2022 DE 102022209637
(43) Veröffentlichungstag der Anmeldung: 07.05.2025
(73) Patentinhaber: BHS Corrugated Maschinen- und Anlagenbau GmbH, 92729 Weiherhammer (DE)
(72) Erfinder: MEENKEN, Thomas, 92685 Floß (DE)
(74) Vertreter: FDST Patentanwälte
(86) Internationale Anmeldenummer: PCT/EP2023/074987
(87) Internationale Veröffentlichungsnummer: WO 2024/056646

(56) Entgegenhaltungen:
- EP-A1- 0 825 016
- WO-A1-2015/128544
- JP-A- 2007 112 024
- JP-A- H0 834 081
- JP-A- H01 316 257
- JP-A- H11 198 256
- US-A- 3 981 758
- US-A1- 2015 285 742

## Beschreibung

Die Erfindung betrifft ein Verfahren zum Betrieb einer Wellpappenanlage sowie eine Wellpappenanlage und ein Computerprogrammprodukt.

Eine Wellpappenanlage dient zur Herstellung einer Wellpappenbahn. Dabei wird die Wellpappenanlage mit mehreren Papierbahnen in Form von Papierrollen beschickt. Die Papierrollen werden mit einem jeweiligen Abroller der Wellpappenanlage abgerollt und die dadurch bereitgestellten Papierbahnen werden mittels mehrerer Bearbeitungseinheiten miteinander zu einer Wellpappenbahn verbunden. Hierbei wird beispielsweise eine der Papierbahnen mit einer Riffelwalze gewellt und dann mit zwei nicht gewellten Papierbahnen verleimt. Auch mehrlagige Wellpappenbahnen mit mehr als einer gewellten Papierbahn sind möglich. Die fertige Wellpappenbahn wird abschließend optional noch mittels der Wellpappenanlage konfektioniert, d.h. in einzelne Stücke geschnitten und gegebenenfalls noch geschlitzt und/oder gerillt.

Die Qualität der hergestellten Wellpappenbahn ist einerseits abhängig von der Wahl entsprechender Werte für die Betriebsparameter der Wellpappenanlage im Betrieb (d.h. während der Herstellung der Wellpappenbahn), andererseits aber auch von den Eigenschaften der Papierbahnen, aus welchen die Wellpappenbahn hergestellt wird. Die Betriebsparameter werden beispielsweise im Betrieb der Wellpappenanlage und manuell von einem Bediener oder automatisch abhängig von Messungen mittels Sensoren unmittelbar vor einer jeweiligen Bearbeitungseinheit (inline-Messung) eingestellt. Auf diese Weise kann sowohl auf wechselnde Umgebungsbedingungen als auch auf variierende Eigenschaften der Papierbahnen reagiert werden. Denkbar sind beispielsweise Temperatur- und Feuchtigkeitsregelungen zur Anpassung von Temperatur und Feuchtigkeit einer jeweiligen Papierbahn als Teil einer Steuerung der Wellpappenanlage, um unmittelbar vor einer jeweiligen Bearbeitungseinheit das Verarbeitungsergebnis dieser Bearbeitungseinheit möglichst optimal zu beeinflussen.

In der US 11,162,226 B2 wird ein Verfahren beschrieben, bei welchem eine Papierbahn mit einem Flüssigkeitsfilm konditioniert wird, um einen bestimmten Feuchtigkeitsgehalt zu erhalten. Die Konditionierung ist abhängig von einem Hygroexpansivitätsattribut, welches für die Papierbahn gemessen oder dieser zugeordnet wird. Die Messung des Hygroexpansivitätsattributs basiert auf einer nachträglichen Messung der Form der fertig hergestellten Wellpappe, woraus dann das Hygroexpansivitätsattribut errechnet wird, sodass dann ähnlichen Papierbahnen das gleiche Hygroexpansivitätsattribut zugeordnet werden kann. Entsprechend basiert auch allgemein die Zuordnung des Hygroexpansivitätsattributs darauf, dass ähnlichen Papierbahnen das gleiche Hygroexpansivitätsattribut zugeordnet werden kann.

Zusätzlich wird verwiesen auf US 10,095,206 B2, EP 3 392 649 B1, EP 3 369 564 B1, EP 2 572 038 B1, EP 2 406 616 B1, EP 2 391 505 B1, EP 1 902 833 A1, EP 0 936 059 A2, DE 10 2017 219 064 A1, DE 10 2015 206 650 A1, CN 107 458 032 A, CN 107 631 684 A, CN 112 644 092 B, CN 207 105 756 U, CN 210 553 357 U, EP 0 536 518 A1, WO 2012/069697 A1, JP 2007 112024 A, GB 2 021 039 A.

Die JP H01 316257 A beschreibt ein Steuerungsverfahren für eine Wellpappenanlage, bei den mehrere Papierrollen jeweils individuelle Papierparamter aufweisen, sodass eine Zuordnungsvorschrift in der Lage ist, individuelle Papierparameter unterschiedlichster Rollen mit einem Qualitätsparameter zu verknüpfen.

Vor diesem Hintergrund ist es eine Aufgabe der Erfindung, die Herstellung einer Wellpappenbahn zu verbessern. Hierzu sollen ein geeignetes Verfahren zum Betrieb einer Wellpappenanlage, eine entsprechende Wellpappenanlage sowie ein Computerprogrammprodukt und insbesondere auch eine vorteilhafte Papierrolle angegeben werden.

Die Aufgabe wird erfindungsgemäß gelöst durch ein Verfahren mit den Merkmalen gemäß Anspruch 1, eine Wellpappenanlage mit den Merkmalen gemäß Anspruch 14 und ein Computerprogrammprodukt mit den Merkmalen gemäß Anspruch 15. Vorteilhafte Ausgestaltungen, Weiterbildungen und Varianten sind Gegenstand der Unteransprüche. Die Ausführungen im Zusammenhang mit dem Verfahren gelten sinngemäß auch für die Wellpappenanlage, das Computerprogrammprodukt sowie für eine Papierrolle und umgekehrt. Sofern nachfolgend Schritte des Verfahrens angegeben sind, ergeben sich vorteilhafte Ausgestaltungen für die Wellpappenanlage dadurch, dass diese ausgebildet ist, einen oder mehrere dieser Schritte auszuführen (insbesondere mittels einer Steuereinheit der Wellpappenanlage). Analog ergeben sich vorteilhafte Ausgestaltungen für das Computerprogrammprodukt dadurch, dass dieses Befehle umfasst, welche bei Ausführung durch eine Wellpappenanlage diese veranlassen einen oder mehrere dieser Schritte auszuführen.

Ein Kerngedanke der Erfindung ist insbesondere die Nutzung von Papierdaten in einer Wellpappenanlage sowie die Zuführung (auch Übermittlung) dieser Papierdaten zu der Wellpappenlage.

Das Verfahren dient zum Betrieb einer Wellpappenanlage. Diese dient wiederum zur Herstellung einer Wellpappenbahn und weist hierzu eine Anzahl von einstellbaren Betriebsparametern auf. Das Einstellen eines Betriebsparameters erfolgt durch Auswählen und Setzen eines Werts für diesen Betriebsparameter. Mittels der Betriebsparameter wird das Verhalten einer oder mehrerer Bearbeitungseinheiten der Wellpappenanlage gesteuert. Beispiele für die Bearbeitungseinheiten sind Abroller, Splicer, Drucker, Single Facer, Brücke, Vorheizer, Leimwerk, Double Facer, Trockenstrecke, Schneideinheit, Schlitzeinheit, Rilleinheit und dergleichen. Auf die Details der Bearbeitungseinheiten kommt es vorliegend jedoch nicht an. Beispiele für die Betriebsparameter sind: Fördergeschwindigkeit, Zugspannung, Tintenmenge, Riffelwalzentemperatur, Leimmenge, Wassermenge zur Befeuchtung, Trocknungstemperatur, Schnitt- und/oder Rillenposition und dergleichen. Auf die Details der Bearbeitungsparameter kommt es vorliegend vorerst ebenfalls nicht an.

Im Rahmen des Verfahrens wird der Wellpappenanlage eine Anzahl an Papierrollen zugeführt, jeweils mit einer (d.h. zumindest einer) Papierbahn aus Papier, aus welchem die Wellpappenbahn hergestellt wird. Mit anderen Worten: die Wellpappenanlage wird im Betrieb mit einer Anzahl an Papierrollen beschickt. Unter "eine Anzahl von" wird hier und auch ganz allgemein "ein oder mehrere" oder "zumindest ein/eine" verstanden. Eine jeweilige Papierrolle ist insbesondere durch eine Papierbahn und eine Hülse (auch als Buchse bezeichnet) gebildet, auf welcher die Papierbahn aufgerollt ist, welche von der Wellpappenanlage zur Herstellung der Wellpappenbahn mittels eines Abrollers abgerollt wird und mit weiteren Papierbahnen weiterer Papierrollen geeignet verbunden wird. Eine jeweilige Papierbahn ist aus Papier hergestellt oder besteht aus Papier. Die Bearbeitungseinheiten verarbeiten dann die Papierbahnen gemäß den Betriebsparametern, d.h. jeder Betriebsparameter ist zumindest einer der Bearbeitungseinheiten zugeordnet und definiert deren Verhalten im Betrieb und somit die Verarbeitung der Papierbahn durch diese Bearbeitungseinheit.

Der Wellpappenanlage werden insbesondere auf zweifache Weise mehrere Papierrollen zugeführt. Einerseits werden der Wellpappenbahn mehrere Papierrollen zugeführt, deren Papierbahnen als unterschiedliche Lagen der Wellpappenbahn miteinander verbunden werden, d.h. es werden mehrere Papierrollen für unterschiedliche Lagen mehr oder weniger gleichzeitig zugeführt. Andererseits werden der Wellpappenbahn auch zeitlich nacheinander mehrere Papierrollen zugeführt, um einen fortlaufenden Betrieb zu realisieren, d.h. nach einem Aufbrauchen einer Papierrolle wird eine neue Papierrolle zugeführt, sodass also mehrere Papierrollen für dieselbe Lage zugeführt werden.

Die Papierrollen sind jeweils durch eine Anzahl an Papierparametern charakterisiert, welche für jede einzelne der Papierrollen individuelle Werte aufweisen, sodass jede der Papierrollen anhand von deren Werten für die Papierparameter individuell charakterisiert ist. Genauer gesagt ist das Papier einer jeweiligen Papierrolle durch eine Anzahl an Papierparametern charakterisiert, welche für jede einzelne der Papierrollen individuelle Werte aufweisen, sodass das Papier einer jeden Papierrolle anhand von dessen Werten für die Papierparameter individuell charakterisiert ist. Die Papierparameter charakterisieren somit speziell das Papier einer jeweiligen Papierrolle, nachfolgend wird jedoch gelegentlich vereinfachend auch lediglich von der Papierrolle gesprochen, wobei dann aber insbesondere deren Papier gemeint ist. Die Werte der Papierparameter einer einzelnen Papierrolle werden auch als "Papierdaten" bezeichnet und bilden zusammen einen Datensatz zu dieser Papierrolle. Die Papierparameter beschreiben jeweils mittelbar oder unmittelbar eine oder mehrere Eigenschaften des Papiers der Papierrolle, sodass unterschiedliche Werte entsprechend unterschiedliche Eigenschaften bedeuten oder implizieren. Der Begriff "Papierparameter" ist dabei insbesondere weit gefasst und meint nicht lediglich physikalische, mechanische, chemische Eigenschaften des Papiers selbst, sondern jegliche Informationen, welche eine Charakterisierung des Papiers ermöglichen, z.B. auch Herstellungsort, Herstellungszeit, Lagerdauer des Papiers oder Betriebsparameter einer Papiermaschine bei der Herstellung des Papiers und dergleichen. Die Papierdaten sind in einer geeigneten Ausgestaltung gemittelte Werte oder orts- und/oder zeitaufgelöste Werte (z.B. ortsaufgelöste Feuchtigkeit entlang der Länge und der Breite der Papierbahn) oder eine Kombination hiervon. Welche Papierparameter genau verwendet werden ist zunächst nebensächlich, wichtiger ist vorliegend, dass die Werte der Papierparameter für jede der Papierrollen individuell vorliegen. Beispielsweise ist der Papierparameter eine Faserausrichtung des Papiers in der Papierrolle und der zugehörige Wert beträgt für eine erste Papierrolle a, für eine zweite Papierrolle b und für eine dritte Papierrolle c.

Der Wert des Papierparameters ist somit für jede Papierrolle (genauer: deren Papier) individuell, was jedoch nicht ausschließt, dass zwei Papierrollen für einen bestimmten Papierparameter nicht auch den gleichen Wert aufweisen. **In** aller Regel unterscheiden sich jedoch die Papiere zweier Papierrollen aufgrund von deren Herstellung, Lagerung, Transport usw. in einem oder mehreren der Papierparameter und weisen somit unterschiedliche Eigenschaften auf. Diese Individualität der Papierrollen wird vorliegend beim Betrieb der Wellpappenanlage und damit bei der Verarbeitung der Papierrollen berücksichtigt und genutzt, um die Herstellung der Wellpappenbahn zu optimieren. Hierzu werden die Betriebsparameter der Wellpappenanlage abhängig von den Werten der Papierparameter (d.h. abhängig von den Papierdaten) eingestellt, sodass die Herstellung der Wellpappenbahn jeweils individuell an die Papierrolle (d.h. deren Papier), welche zu einem gegebenen Zeitpunkt verarbeitet wird, angepasst wird. Mit anderen Worten: da sich die Eigenschaften des Papiers regelmäßig von Papierrolle zu Papierrolle unterscheiden (und gegebenenfalls sogar auch entlang einer einzelnen Papierrolle), wird der Betrieb der Wellpappenanlage entsprechend an die jeweils verwendete Papierrolle angepasst, vorzugsweise wiederkehrend und/oder kontinuierlich. Dabei werden die Papierdaten nicht oder nicht ausschließlich erst in der Wellpappenanlage ermittelt, sondern bereits zuvor und insbesondere abseits und unabhängig von der Wellpappenanlage. In den Papierdaten ist vorteilhafterweise der Werdegang und/oder das bisherige Leben des Papiers der Papierrolle enthalten, sodass die Papierdaten sozusagen einen Lebenslauf der Papierrolle darstellen. Insbesondere enthalten die Papierdaten nicht zwingend nur solche Papierparameter, welche auch noch inline in der Wellpappenanlage ermittelt werden könnten, sondern vorteilhafterweise auch solche Papierparameter, welche einer Ermittlung innerhalb der Wellpappenanlage prinzipbedingt gar nicht zugänglich sind, z.B. Papierherstellungsprozessparameter. Das hier vorgestellte Verfahren ist somit entsprechend dynamisch dahingehend, dass individuelle Eigenschaften der Papierrolle berücksichtigt werden. Vorstehendes gilt analog bei gleichzeitiger Verarbeitung mehrerer Papierrollen, deren Papierdaten dann entsprechend gemeinsam genutzt werden, um die Betriebsparameter einzustellen. Die Papierparameter selbst - und somit die Papierdaten insgesamt - sind statisch, d.h. konstant für das Papier einer gesamten Papierrolle, oder dynamisch, d.h. variieren entlang des Papiers der Papierrolle, sodass sich z.B. ein Parameterverlauf in Abhängigkeit des jeweils gerade abgerollten Teilabschnitts der Papierbahn ergibt. Auch eine Kombination ist möglich, sodass ein oder mehrere Papierparameter statisch sind und ein oder mehrere andere Papierparameter dynamisch.

Vorliegend wird ohne Beschränkung der Allgemeinheit davon ausgegangen, dass mehrere Papierrollen mit jeweils mehrere Papierparametern vorliegen und auch mehrere Betriebsparameter abhängig von den Papierparametern eingestellt werden. Dies ist auch grundsätzlich bevorzugt.

Vorteilhaft ist vorliegend, dass die Papierparameter einer jeweiligen Papierrolle zum Einstellen der Betriebsparameter der Wellpappenanlage genutzt werden und somit insbesondere direkt zur Einstellung der Betriebsparameter und somit auch zur Steuerung der Wellpappenanlage genutzt werden. Dies steht im Gegensatz zur eingangs genannten US 11,162,226 B2, in welcher einer jeweiligen Papierrolle anhand eines Vergleichs mit anderen Papierrollen zuerst ein Hygroexpansivitätsattribut zugeordnet wird, anhand dessen dann die Konditionierung innerhalb der Wellpappenanlage eingestellt wird. Somit erfolgt dort keine Einstellung der Betriebsparameter abhängig von den konkreten Eigenschaften einer jeweiligen Papierrolle. Zudem erfolgt dort eine Zuordnung über ein rein datengestütztes Modell, welches über mehrere Wellpappenanlagen unterschiedlicher Wellpappenhersteller hinweg korreliert wird und wobei im Grunde die Betriebsparameter der Wellpappenanlagen untereinander abgeglichen werden. Dabei werden aber ähnliche oder sogar unveränderte Papierdaten angenommen (z.B. gleicher Hersteller oder gleicher Produktionsslot). Mit anderen Worten: der Ansatz in US 11,162,226 B2 zielt darauf ab, die Daten unterschiedlicher Wellpappenanlagen zu nutzen, wohingegen die vorliegende Erfindung darauf abzielt, die Papierdaten von Papierrollen mit regelmäßig unterschiedlichen Papiereigenschaften zu nutzen, gegebenenfalls auch nur für eine einzige Wellpappenanlage.

Ganz allgemein werden außerhalb der Wellpappenanlage bestimmte Papierparameter einer Papierrolle, selbst wenn diese Papierparameter bekannt sein sollten, bisher nicht genutzt, um damit die Wellpappenanlage zu steuern. Das ist an sich zunächst auch nicht erforderlich, denn mit einem Fokus nur auf die Wellpappenlage selbst ist auch eine Feedback-Regelung möglich, bei welcher anhand der hergestellten Wellpappenbahn reagiert wird, indem die Betriebsparameter nachjustiert werden. Eine solche Reaktion und eine daher zwangsläufig erst nachfolgende Anpassung führen jedoch unvermeidlich dazu, dass zwischenzeitig Ausschussware oder zumindest ein nicht-optimales Produkt hergestellt wird, wodurch die Wirtschaftlichkeit der Wellpappenanlage reduziert wird. Demgegenüber weist die hier vorgestellte Wellpappenanlage aufgrund der Nutzung der Papierparameter zur Steuerung eine vorteilhaft verkürzte Regelstrecke auf. Da die Werte der Papierparameter bereits besonders früh im Betrieb bekannt sind und insbesondere schon bevor die Papierrolle überhaupt verarbeitet wird, reagiert die Regelstrecke auch entsprechend vorausschauend auf etwaige Änderungen der Werte der Papierparameter. Die Regelstrecke ist demnach hier insbesondere eine Feedforward-Regelung. Bei einer Feedback-Regelung hingegen würde - wie bereits beschrieben - das hergestellte Ausgangsprodukt (die Wellpappenbahn) untersucht und abhängig davon würden dann die Betriebsparameter rückwirkend gesteuert, d.h. das Ausgangsprodukt liefert das Eingangssignal für die Regelstrecke. Bei der hier beschriebenen und vorteilhafterweise verwendeten Feedforward-Regelung hingegen liefert das Eingangsprodukt (die Papierrolle) das Eingangssignal für die Regelstrecke, um die Betriebsparameter zu steuern (genauer: zu regeln) und ein bestimmtes Ausgangsprodukt zu erhalten.

Vorzugsweise werden die verwendeten Werte der Papierparameter einer einzelnen Papierrolle möglichst aggregiert, d.h. von der Wellpappenanlage aus möglichst wenig verschiedenen Quellen und vorzugsweise lediglich aus einer einzelnen Quelle empfangen und somit als ein soweit wie möglich zusammengefasster Datensatz. Die Papierdaten werden somit vorzugsweise gerade nicht an unterschiedlichen Stellen und/oder zu unterschiedlichen Zeitpunkten an die Wellpappenanlage übergeben, sondern gesammelt in einem einzelnen Datensatz und/oder zu einem einzigen Zeitpunkt. Optional werden analog sogar die Papierdaten mehrerer Papierrollen aggregiert, und zwar derart, dass noch eine Zuordnung einzelner Werte zu einer einzelnen Papierrolle möglich ist, zweckmäßigerweise mittels einer ID für eine jeweilige Papierrolle.

Die Erfindung nutzt zunächst die Beobachtung, dass die Eigenschaften des Papiers einer Papierrolle grundsätzlich durch dessen Herstellung maßgeblich festgelegt werden und sich dann im Weiteren durch dessen Werdegang (Transport, Lagerung und dergleichen) noch verändern können. Wenn die Papierrolle dann tatsächlich der Wellpappenanlage zugeführt wird und darin verarbeitet wird, haben sich die Werte der Papierparameter einer jeweiligen Papierrolle entsprechend deren individuellem Lebensweg entwickelt, sodass im Grunde keine zwei Papierrollen vollständig identisch sind. Durch eine weitgehende Gleichbehandlung unterschiedlicher Papierrollen bis zur Verarbeitung ist es zwar grundsätzlich möglich, die Eigenschaften dieser Papierrollen möglichst ähnlich zu halten, sodass eine Verarbeitung bei gleichen Betriebsparametern zu tolerierbaren Schwankungen bei der Qualität der Wellpappenbahn führt. Dies mag in der Praxis auch in vielen Fällen ausreichend sein, erfordert aber in jedem Fall das Einhalten gewisser Toleranzen bei der Herstellung des Papiers.

Die Erfindung erschließt nun zusätzlich das Potential, welches sich dadurch ergibt, dass die Eigenschaften des Papiers einer jeweiligen Papierrolle tatsächlich auch individuell berücksichtigt werden, sodass auch kleine Unterschiede durch entsprechendes Einstellen der Betriebsparameter ausgeglichen werden, um so ausgehend von einer Papierrolle mit gegebenen Eigenschaften eine Wellpappenbahn mit maximaler Qualität herzustellen. Ein weiterer Vorteil der hier beschriebenen Erfindung ist dann entsprechend, dass Papierrollen mit größerer Toleranz hergestellt werden können, da jegliche Abweichungen von als ideal definierten Werten für die Papierparameter nun im Betrieb der Wellpappenanlage durch diese optimal ausgeglichen werden. Damit lassen sich Papier und allgemein Papierrollen einfacher und kostengünstiger herstellen. Außerdem lassen sich nun auch solche Papierrollen verwenden, welche zuvor aufgrund zu starker Mängel aussortiert worden wären. Auch ist es nun möglich, solche Papierrollen zu verwenden, welche üblicherweise nicht zur Herstellung von Wellpappe vorgesehen sind, denn aufgrund der nun bekannten Papierdaten und deren Verwendung lässt sich im Grunde jede beliebige Papierrolle optimal und zielgerichtet zur Herstellung von Wellpappe nutzen. Letztendlich lassen sich Papier und allgemein Papierrollen dadurch kostengünstiger herstellen oder sind kostengünstiger in der Beschaffung, mit entsprechendem Vorteil für die Wellpappenbahn.

Vorliegend werden demnach die individuellen Eigenschaften des Papiers einer Papierrolle gewinnbringend zur Optimierung einer Prozesssteuerung der Wellpappenanlage genutzt. Mit anderen Worten: die individuellen Eigenschaften einer Papierrolle werden zur Steuerung der Wellpappenanlage verwendet, sodass deren Betrieb dann abhängig ist von den individuellen Werten der Papierparameter einer jeweiligen Papierrolle. Somit wird die Wellpappenanlage rollenindividuell gesteuert. Dies setzt insbesondere voraus, dass die Papierdaten der jeweiligen Papierrolle noch vor deren Verarbeitung und vorzugsweise so früh wie möglich bekannt und verfügbar sind und entsprechend nicht erst unmittelbar vor einer jeweiligen Bearbeitungsstation mittels entsprechender Sensoren bestimmt werden. Vorzugsweise sind die Papierdaten bereits bekannt, bevor das Papier einer Papierrolle der Wellpappenanlage zugeführt wird. Alternativ oder zusätzlich werden die Werte der Papierparameter einer jeweiligen Papierrolle mittels geeigneter Sensoren innerhalb der Wellpappenanlage gemessen, dann jedoch nicht erst unmittelbar vor einer jeweiligen Bearbeitungseinheit oder sogar erst danach, sondern bereits beim Abrollen der Papierrolle im Abroller oder unmittelbar danach, d.h. noch bevor die Papierbahn in einer Bearbeitungseinheit (z.B. Drucker, Single Facer, Vorheizer, Leimwerk) bearbeitet wird. Entsprechend unterscheidet sich das hier vorgestellte Verfahren von einer inline-Messung gerade dadurch, dass die Papierdaten der Papierrolle vorausschauend zugeführt und insbesondere auch genutzt werden und nicht erst bei Bedarf oder nachträglich. Dadurch werden nicht-optimale Produkte und Ausschussware vermieden.

Ein Vorteil ist insbesondere, dass die Papierdaten zur Plausibilisierung, Eichung oder Prüfung von Sensoren der Wellpappenanlage verwendet werden können und zweckmäßigerweise auch hierzu verwendet werden. Der Wert eines Papierparameters wird dann mit einem Sensor der Wellpappenanlage ermittelt und mit dem Wert, welcher zu diesem Papierparameter in den Papierdaten gespeichert ist, verglichen. Basierend hierauf ergeben sich wenigstens die genannten Handlungsoptionen Plausibilisierung, Eichung und Prüfung des Sensors. Beispielsweise weisen Feuchtigkeitssensoren in der Wellpappenanlage eine Messungenauigkeit auf, welche mittels des Papierparameters "Feuchtigkeit" aus den Papierdaten der Papierrolle korrigiert und/oder korreliert wird.

Ein weiterer Vorteil ist insbesondere, dass mittels der Papierdaten, vorzugsweise Temperatur und Feuchtigkeit des Papiers, der Energiebedarf zur Herstellung einer Wellpappenbahn aus der jeweiligen Papierrolle (d.h. zur Verarbeitung der Papierrolle) ermittelbar ist. Entsprechend wird in einer zweckmäßigen Ausgestaltung anhand der Papierdaten einer Papierrolle ein Energiebedarf ermittelt, welcher angibt, wieviel Energie zur Herstellung einer Wellpappenbahn aus der Papierrolle benötigt wird.

Bevorzugterweise werden Werte für die Betriebsparameter anhand einer Vorschrift ausgewählt, welche die Werte der Papierparameter mit den Werten für die Betriebsparameter derart verknüpft, dass ein Qualitätsmaß für die Wellpappenbahn verändert, insbesondere verbessert, insbesondere maximiert, wird. Das Qualitätsmaß ist im Grunde beliebig, ein Beispiel für ein geeignetes Qualitätsmaß ist das Ausmaß eines Verbiegens der Wellpappenbahn, auch als "warp" bezeichnet oder auch der Anteil an Ausschussware, d.h. welcher Anteil der Wellpappenbahn aufgrund mangelhafter Herstellung nicht bestimmungsgemäß verwendbar ist. Ein weiteres, geeignetes Qualitätsmaß ist ein Festigkeitswert der Wellpappenbahn, insbesondere Kantenstauchwiderstand (z.B. gemäß ECT = Edge-Crush-Test), Flachstauchwiderstand (z.B. gemäß FCT = Flat-Crush-Test) oder dergleichen und allgemein jede Wellpappeneigenschaft. Auch eine Kombination mehrerer Qualitätsmaße miteinander ist vorteilhaft. Die Vorschrift ist in einer geeigneten Ausgestaltung angelernt, d.h. wird vorab in einem Lernverfahren erzeugt, bei welchem das Qualitätsmaß als Funktion der Papierparameter und der Betriebsparameter gemessen wird. Die Vorschrift wird dann aus dieser Funktion abgeleitet. Für das Lernverfahren sind verschiedene Ansätze geeignet, auf die Details kommt es vorliegend zunächst nicht an.

Vorliegend werden die Betriebsparameter vorteilhafterweise nicht nur mittelbar, sondern unmittelbar abhängig von den Werten der Papierparameter eingestellt. Die bereits beschriebene Vorschrift ist hierbei insbesondere eine Funktion, für welche die Papierparameter dann Eingangsparameter sind und für welche die Betriebsparameter entsprechend Ausgangsparameter sind. Die Werte der Papierparameter werden von der Wellpappenanlage gemäß der, insbesondere vordefinierten, Vorschrift direkt in geeignete Werte für die Betriebsparameter umgesetzt und diese Werte werden dann auch eingestellt. Eine Bestimmung von Zwischenparametern erfolgt vorzugsweise nicht. Dies steht im Gegensatz zur eingangs genannten US 11,162,226 B2, in welcher für eine gegebene Papierbahn zuerst noch das Hygroexpansivitätsattribut ermittelt wird, um anhand dessen dann geeignete Betriebsparameter für die Konditionierung der Papierbahn zu erhalten. Dies ist vorliegend entbehrlich, da die genannte Vorschrift die Papierparameter unmittelbar mit den Betriebsparametern verknüpft und dadurch entsprechende Berechnungen und Vorüberlegungen eingespart werden. Dem liegt insbesondere die Erkenntnis zugrunde, dass es auf eine Kenntnis der Wirkzusammenhänge oder Kausalitäten nicht ankommt, sondern dass es genügt, durch entsprechende Experimente, Anlernverfahren und/oder einen Big Data-Ansatz vorab die Vorschrift empirisch zu ermitteln. Insofern ist auch die Vorschrift an sich nicht notwendigerweise bekannt, sondern insbesondere eine Art Black-Box, welche lediglich für gegebene Papierdaten entsprechende Werte für die Betriebsparameter ausgibt. Beispielsweise ist die Vorschrift durch ein neuronales Netz oder dergleichen implementiert, z.B. in einem virtuellen Sensor. Grundsätzlich sind verschiedene Lösungen denkbar und geeignet, welche ähnliche oder gleiche Ergebnisse auf unterschiedliche Weisen realisieren.

Welche Papierparameter konkret genutzt werden ist zunächst von untergeordneter Bedeutung und wird mit zunehmender Anzahl an Papierparametern auch weniger relevant. Entsprechend werden vorzugsweise wenigstens 10 Papierparameter verwendet, insbesondere wenigstens 100. Das Gesamtvolumen der Papierdaten ergibt sich vor allem aus der Anzahl an Werten, welche zu den jeweiligen Papierparametern gespeichert sind. Ein statischer Papierparameter enthält lediglich einen einzelnen Wert (z.B. Laufmeter auf der Papierrolle, Produktionsdatum oder Mittelwert eines dynamischen Papierparameters), ein dynamischer Papierparameter enthält dagegen eine Vielzahl an Werten (z.B. Feuchtigkeit als Funktion von Breite und Länge der Papierrolle), welche insbesondere von der Wertedichte/Abtastrate (z.B. 1/cm) abhängt und regelmäßig insbesondere im Bereich von 1.000 bis 1.000.000 oder mehr liegt. Die Papierparameter müssen auch nicht zwingend in einer unmittelbar erkennbaren, kausalen Relation zum Qualitätsmaß für die Wellpappenbahn stehen. Insbesondere beim bereits genannten Big Data-Ansatz ist die Kenntnis von Relationen von untergeordneter Bedeutung. Einige Papierparamater haben jedoch regelmäßig einen größeren Einfluss auf die Qualität der Wellpappenbahn als andere Papierparameter und werden demnach bevorzugt verwendet, insbesondere dann, wenn nur wenige (d.h. höchstens 10) Papierparameter verwendet werden. Daher sind in einer geeigneten Ausgestaltung einer oder mehrere der Papierparameter ausgewählt aus den folgenden Papierparametern: Faserausrichtung des Papiers der Papierrolle, Versagensspannung des Papiers der Papierrolle.

In einer zweckmäßigen Ausgestaltung werden zwei der Papierrollen, welche der Wellpappenanlage zur gleichzeitigen Verarbeitung zugeführt werden, derart ausgewählt, dass diese zumindest in einem der Papierparameter um nicht mehr als einen Maximalwert voneinander abweichen. Mit anderen Worten: zwei der Papierrollen, welche auch gleichzeitig verarbeitet werden, sind sich möglichst ähnlich. Die Einstellung der Betriebsparameter abhängig von den Werten der Papierparameter wird durch eine Auswahl möglichst gleicher Papierrollen vereinfacht. Besonders vorteilhaft ist dies hinsichtlich der Feuchtigkeit. Entsprechend ist in einer geeigneten Ausgestaltung einer der Papierparameter eine Feuchtigkeit des Papiers einer jeweiligen Papierrolle. Zweckmäßigerweise werden dann zusätzlich zwei der Papierrollen (welche der Wellpappenanlage zur gleichzeitigen Verarbeitung zugeführt werden), derart ausgewählt, dass deren Feuchtigkeiten um nicht mehr als einen Maximalwert, insbesondere 2 % (relativ zueinander), voneinander abweichen. Mit anderen Worten: es werden Papierrollen mit möglichst ähnlicher Feuchtigkeit ausgewählt. Die zwei Papierrollen werden dann auch gleichzeitig verarbeitet und bilden insbesondere unterschiedliche Lagen der Wellpappenbahn, vorzugsweise zwei äußere Lagen der Wellpappenbahn, d.h. eine Oberseite und einer Unterseite. Dem liegt die Überlegung zugrunde, dass bei einer zu großen Abweichung der Feuchtigkeit, d.h. einer Abweichung, welche größer ist als der Maximalwert, die Herstellung einer Wellpappenbahn unter Umständen nicht mehr möglich ist oder zumindest nicht mit ausreichender Qualität gewährleistet werden kann. Da vorliegend vorteilhaft die Papierparameter zugänglich sind, ist es möglich, die Papierrollen gezielt derart auszuwählen, dass diese optimal zueinander passen, speziell hinsichtlich der jeweiligen Feuchtigkeit des Papiers wie beschrieben.

Besonders bevorzugt ist zumindest einer der Papierparameter ein dynamischer Papierparameter, dessen Werte als Funktion der Breite und/oder Länge der Papierbahn der Papierrolle angegeben sind. Demgegenüber weisen statische Papierparameter entlang der gesamten Papierbahn denselben Wert auf. Geeignete dynamische Papierparameter sind: Faserausrichtung als Funktion einer Breite und/oder Länge der Papierbahn, Temperatur als Funktion einer Breite und/oder Länge der Papierbahn, z.B. in Form einer "heat map", welche die Temperatur an einer jeweiligen Stelle der Papierbahn angibt, und Feuchtigkeit als Funktion einer Breite und/oder Länge der Papierbahn, analog z.B. in Form einer "moisture map". Ein dynamischer Papierparameter zeichnet sich dadurch aus, dass dieser an unterschiedlichen Stellen der Papierbahn potentiell unterschiedliche Werte aufweist und demnach eine Inhomogenität der Papierrolle beschreibt. Durch Verwendung eines oder mehrerer dynamischer Papierparameter ergibt sich ein detaillierteres Bild der Papierrolle, welches bei der Einstellung der Betriebsparameter vorteilhaft genutzt wird. Die Betriebsparameter werden dann entsprechend dynamisch eingestellt.

Zweckmäßig ist auch die Nutzung von Papierherstellungsprozessparametern, d.h. von Prozessparametern, welche bei der Herstellung des Papiers einer jeweiligen Papierrolle selbst verwendet wurden. Die Papierherstellungsprozessparameter sind keine unmittelbaren, direkten Eigenschaften des Papiers (wie Feuchtigkeit, Faserausrichtung, Länge, Breite usw.), sondern Parameter der Herstellung des Papiers und somit lediglich mittelbare oder indirekte Papierparameter. **In** einer geeigneten Ausgestaltung umfassen die Papierparameter entsprechend eine Anzahl von Papierherstellungsprozessparametern, welche bei der Herstellung der Papierrolle verwendet wurden. Die Papierherstellungsprozessparameter sind insbesondere Betriebsparameter einer Papiermaschine zur Herstellung der Papierrolle und/oder zur Herstellung des Papiers der Papierrolle. Mit den Papierherstellungsprozessparameter wird zweckmäßigerweise zwischen der Herstellung der Wellpappe und der Herstellung des hierbei verwendeten Papiers ein korrelativer Zusammenhang ermittelt, welcher in den direkten Papierparameter unter Umständen nicht zu erkennen ist. Eine nachträgliche Bestimmung anderer Papierparameter wie Versagensspannung und Faserausrichtung, Temperatur, Feuchtigkeit und dergleichen ist dadurch unter Umständen entbehrlich, sodass auf diese in einer vorteilhaften Ausgestaltung ganz oder teilweise auch verzichtet wird. Dabei wird die Erkenntnis genutzt, dass letztendlich die Herstellung der Papierrolle maßgeblich deren Eigenschaften beeinflusst und dass die Herstellung wiederum maßgeblich von den Papierherstellungsprozessparametern beeinflusst ist. Daher werden diese vorteilhaft direkt zur Einstellung der Betriebsparameter der Wellpappenanlage verwendet.

Geeignete Papierparameter sind insbesondere nachfolgend aufgelistet:
a) Papierrolleneigenschaften
   - (exakter) Hülsenaußendurchmesser
   - (exakte) Laufmeter auf der Papierrolle
   - Splicestellen in der Papierrolle
b) Werdegang des Papiers
   - Produktionsdatum
   - Herstellername
   - Herstellungsort
   - Herstellungsdatum
   - Lagerzeit
   - Lagerbedingungen (z.B. Feuchtigkeit und/oder Temperatur der Umgebung)
   - Transportdauer
   - Transportbedingungen (z.B. Feuchtigkeit und/oder Temperatur der Umgebung)
c) Grundeigenschaften des Papiers
   - Feuchtigkeit/Feuchtigkeitsgehalt
   - flächenbezogene Masse
   - Dicke
   - Aschegehalt
   - Faserausrichtung (auch Faserausrichtungswinkel)
d) Zugeigenschaften des Papiers
   - Bruchkraft
   - Reißlänge
   - Bruchdehnung
   - Elastizitätsmodul
e) Oberflächen-/Bedruckbarkeitseigenschaften des Papiers
   - Glätte, z.B. nach Bekk
   - Rauigkeit, z.B. nach Bendtsen
   - Luftdurchlässigkeit, z.B. nach Bendtsen/Gurley
f) Wellpappeneigenschaften (speziell Wellpappenrohpapiereigenschaften)
   - Flachstauchwiderstand (z.B. gemäß CMT = Concora-Medium-Test, FCT = Flat-Crush-Test oder dergleichen)
   - Streifenstauchwiderstand (z.B. gemäß SCT = Short-Crush-Test)

Obige Liste nennt bevorzugte Papierparameter, ist jedoch nicht als abschließend zu verstehen. Die Verwendung lediglich einer Teilmenge der genannten Papierparameter ist bereits vorteilhaft, besonders zweckmäßig ist allerdings die Verwendung möglichst vieler Papierparameter.

Unabhängig davon, ob ein Papierparameter statisch oder dynamisch ist, sind besonders solche Papierparameter geeignet, welche sich während der Lebensdauer der Papierrolle, d.h. bis zu deren Verarbeitung in der Wellpappenanlage, möglichst wenig oder gar nicht verändern. Beispielsweise verändert sich die Temperatur einer Papierrolle typischerweise beim Transport vom Papierwerk zur Wellpappenanlage und ist somit weniger geeignet (jedoch nicht gänzlich ungeeignet). Die Feuchtigkeit ist im Vergleich zur Temperatur weniger problematisch, jedoch grundsätzlich auch veränderlich über die Zeit. Demgegenüber bleibt die Faserrichtung (gegebenenfalls sogar als dynamischer Papierparameter als Funktion von Breite und Länge) unverändert und ist somit besonders geeignet.

Die Ermittlung der Werte der Papierparameter ist nicht notwendigerweise ein Bestandteil des hier beschriebenen Verfahrens zum Betrieb der Wellpappenanlage. Zweckmäßigerweise wurden zumindest einer und vorzugsweise sämtliche der Werte der Papierparameter einer jeweiligen Papierrolle im Voraus ermittelt, nämlich bevor diese Papierrolle der Wellpappenanlage zugeführt wird. Die Werte der Papierparameter sind somit noch vor einer Beschickung der Wellpappenanlage mit der Papierrolle bekannt und brauchen demnach lediglich an die Wellpappenanlage übermittelt werden, um die Betriebsparameter einzustellen. Dadurch wird ein unterbrechungsfreier und vollautomatischer Betrieb realisiert.

Geeigneterweise wurden die Werte der Papierparameter einer jeweiligen Papierrolle bereits bei deren Herstellung ermittelt, speziell im Falle der oben genannten Papierherstellungsprozessparameter. Alternativ oder zusätzlich wurden die Werte der Papierparameter einer jeweiligen Papierrolle nach deren Herstellung und insbesondere mittels einer Laboruntersuchung ermittelt. Ganz allgemein ist es vorteilhaft, wenn bereits bei oder unmittelbar nach der Herstellung und insbesondere noch vom Hersteller der Papierrolle selbst zumindest ein Teil der Papierparameter bestimmt wird und geeignet gespeichert wird, z.B. auf einem Datenträger, um später an eine Wellpappenanlage übermittelt zu werden.

Vorteilhaft ist eine Aktualisierung eines oder mehrerer Papierparameter anhand von Papierdaten, welche den Lebensweg der Papierrolle insbesondere bis zur tatsächlichen Verarbeitung in der Wellpappenanlage beschreiben. Die Papierdaten enthalten dann einerseits eine oder mehrere Papierparameter, welche zeitlich veränderlich sind (z.B. Temperatur oder Feuchtigkeit) und zusätzlich noch Logistikdaten (d.h. Lager,- Transport- und/oder Trackingdaten, z.B. Transportdauer, Transportbedingungen, Lagerdauer, Lagertemperatur usw.). Der zeitlich veränderliche Papierparameter wird beispielsweise bei oder nach der Herstellung der Papierrolle und vor deren Abtransport aus der Papierfabrik gespeichert und ist dann im Weiteren einer Änderung aufgrund der Lagerung und des Transports der Papierrolle unterworfen. Diese Änderung wird nun mittels der Logistikdaten nachvollzogen, um dann die Papierparameter zu aktualisieren (d.h. neu zu berechnen), vorzugsweise unmittelbar vor oder während der Verarbeitung in der Wellpappenanlage. In einer geeigneten Ausgestaltung fährt ein Temperatur- und Feuchtigkeitslogger mit der Papierrolle auf einem LKW mit und die initialen Papierparameter Temperatur und Feuchtigkeit aus der Papierfabrik werden dann mit aufgezeichneten Daten des Temperatur- und Feuchtigkeitslogger aktualisiert, z.B. angereichert und mittels eines geeigneten Modells (z.B. Temperaturverteilungsberechnungen und Diffusionsgleichungen) korrigiert.

Die Wellpappenanlage weist zweckmäßigerweise eine Datenschnittstelle auf, über welche die Werte der Papierparameter des Papiers einer jeweiligen Papierrolle an die Wellpappenanlage übermittelt werden. Die Werte werden vor, während und/oder nach der Beschickung der Wellpappenanlage übermittelt, zweckmäßigerweise noch bevor die Papierrolle zur Verarbeitung abgerollt wird. Im Grunde ist es aber ausreichend, wenn unmittelbar vor einer jeweiligen Bearbeitungsstation zumindest diejenigen Werte übermittelt werden, welche für die Verarbeitung der einlaufenden Papierbahn in diese Bearbeitungsstation konkret benötigt werden, um die Betriebsparameter einzustellen, welche dieser Bearbeitungsstation zugeordnet sind. Im Sinne des hier bevorzugten vorausschauenden Ansatzes werden jedoch sämtliche Werte vorzugsweise gemeinsam als ein einzelner, aggregierter Datensatz über die Datenschnittstelle übermittelt und stehen dann sofort zur Verfügung.

In einer besonders bevorzugten Ausgestaltung ist jeder Papierrolle ein Datenträger zugeordnet, auf welchem die individuellen Werte der Papierparameter des Papiers der jeweiligen Papierrolle gespeichert sind. Ein jeweiliger Datenträger ist somit genau einer Papierrolle zugeordnet und enthält insbesondere auch lediglich die Papierdaten einer einzelnen Papierrolle. Zum Einstellen der Betriebsparameter abhängig von den Papierparametern wird der Datenträger von der Wellpappenanlage vorzugsweise ausgelesen. Hierzu weist die Wellpappenanlage ein geeignetes Lesegerät auf. Das Lesegerät ist insbesondere ein Teil der bereits erwähnten Datenschnittstelle. Der Datenträger ist geeigneterweise ein Code, z.B. QR-Code oder Barcode, ein Transponder, z.B. RFID-Tag oder NFC-Tag, oder ein flüchtiger oder nichtflüchtiger Speicher, z.B. eine Diskette, eine CD oder ein Flashspeicher. Das Lesegerät ist entsprechend z.B. ein Scanner, eine Empfangseinheit mit Antenne, ein Laufwerk, ein USB-Port oder dergleichen. Durch den Datenträger wird eine offline-Lösung realisiert, bei welcher die Werte der Papierparameter an die Wellpappenanlage übermittelt werden, ohne dass diese mit dem Internet oder einem anderen Netzwerk verbunden sein muss, um den Datensatz zu einer jeweiligen Papierrolle zu empfangen.

Der Datenträger ist entweder an der Papierrolle angebracht oder wird separat von dieser bereitgestellt. Der Datenträger ist nach einer Ausführungsform ein Etikett oder eine Art Datenblatt für die Papierrolle und wird auch als "roll tag" bezeichnet. Der Datenträger ist zudem vorteilhaft gemeinsam mit der Papierrolle versendbar.

Entsprechend ist der Datenträger in einer vorteilhaften Ausgestaltung an der Papierrolle angebracht, z.B. unmittelbar auf deren Papierbahn oder auf einer Verpackung der Papierrolle, z.B. unmittelbar am Papier oder an der Hülse aufgeklebt oder aufgedruckt. Dadurch sind Zuordnung und Handhabung des Datensatzes besonders unkompliziert. Beispielsweise ist der Datenträger ein Code, welcher an der Papierrolle angebracht ist und welcher beim Beschicken der Wellpappenanlage mit einem Lesegerät derselben eingelesen wird.

Grundsätzlich ist es denkbar, dass eine Papierrolle mehrfach (z.B. dreimal) verwendet wird, d.h. nach der Zufuhr in die Wellpappenanlage nicht zwingend vollständig aufgebraucht wird, sondern nur teilweise, und dann wieder der Wellpappenanlage entnommen und eingelagert wird. Bei entsprechendem Bedarf wird die nun teilweise verbrauchte Papierrolle dann zu einem späteren Zeitpunkt erneut der Wellpappenanlage zugeführt. Der Datenträger ist daher vorzugsweise derart ausgebildet, dass dieser auch bei mehrmaliger Zufuhr und Entnahme der Papierrolle zur beziehungsweise aus der Wellpappenanlage zuverlässig mit der Papierrolle verknüpft ist. In einer geeigneten Ausgestaltung ist der Datenträger hierzu lösbar und wird bei der Zufuhr der Papierrolle entfernt und bei der Entnahme und anschließenden Einlagerung wieder an der Papierrolle angebracht. In einer anderen geeigneten Ausgestaltung ist der Datenträger derart an der Papierrolle angebracht, dass der Datenträger nicht entfernt werden muss, also an der Papierrolle verbleibt, wenn diese in der Wellpappenanlage verarbeitet wird. Zweckmäßigerweise ist der Datenträger hierzu im Zentrum, insbesondere an oder in einer Hülse der Papierrolle angebracht. Hierfür eignen sich insbesondere kontaktlos oder elektronisch auslesbare Datenträger wie RFID- und NFC-Tags und dergleichen. Insgesamt ist auf diese Weise sichergestellt, dass die Papierparameter auch bei mehrmaliger Verwendung einer Papierrolle dann über deren gesamte Nutzungsdauer zur Verfügung stehen. Für die bereits genannte ID, welche unten noch genauer beschrieben ist, gelten die Ausführungen zum Datenträger analog.

Speziell bei mehrfach verwendeten Papierrollen ist eine Aktualisierung (Update) der Papierparameter vorteilhaft. Hierzu werden in einer geeigneten Ausgestaltung ein oder mehrere der Papierparameter einer Papierrolle aktualisiert, falls diese Papierrolle lediglich teilweise verbraucht aus der Wellpappenanlage entfernt wird und für eine spätere, erneute Verwendung zwischengelagert wird, insbesondere abseits der Wellpappenanlage, z.B. in einem Rollenlager. Die Aktualisierung ist entweder eine Änderung eines bereits vorhandenen Papierparameters oder eine Hinzufügung eines neuen Papierparameters. Zweckmäßig ist beispielsweise eine Aktualisierung der Länge des Papiers, d.h. eine Speicherung der verbleibenden Länge an Papier, oder des Durchmessers der Papierrolle und grundsätzlich aller Eigenschaften der Papierrolle, welche sich durch eine Verarbeitung in der Wellpappenanlage ändern. Als gegebenenfalls neu hinzugefügter Papierparameter eignet sich beispielsweise eine Abrollrichtung, d.h. die Richtung, mit welcher die Papierrolle bei der Verarbeitung abgerollt wurde (speziell bei Papier, aus welchem eine Welle der Wellpappenbahn hergestellt wird). Besonders vorteilhaft ist eine Ausgestaltung, bei welcher ein oder mehrere Betriebsparameter der Wellpappenanlage, welche bei der Verarbeitung der Papierrolle verwendet wurden, bei der Aktualisierung der Papierparameter gespeichert werden, sodass bei erneuter Verwendung der Papierrolle sofort die für diese zuletzt verwendeten Betriebsparameter zugänglich und nutzbar sind. Die einmal gewählten Betriebsparameter werden sozusagen vererbt. Alternativ oder zusätzlich wird bei der Aktualisierung gespeichert, mit welchen anderen Papierrollen die Papierrolle gemeinsam verarbeitet wurde und optional auch, bei welchen Betriebsparametern dies erfolgte. Auf diese Weise werden vorteilhaft Betriebsparameter erlernt, welche im Zusammenspiel mit solchen oder ähnlichen (z.B. aus derselben Charge) Papierrollen besonders vorteilhaft sind. Die Aktualisierung wird insbesondere mit einem Schreibgerät der Wellpappenanlage durchgeführt. Optional sind das Lesegerät und das Schreibgerät zu einem Schreib- und Lesegerät kombiniert.

Alternativ oder zusätzlich zur genannten offline-Lösung ist auch eine online-Lösung grundsätzlich vorteilhaft, z.B. eine Cloud-Lösung. Eine solche online-Lösung hat insbesondere den Vorteil, dass die Ermittlung von Papierparametern z.B. mittels einer Laboruntersuchung parallel (d.h. zeitgleich) zum Transport der Papierrolle möglich ist und dann die Papierparameter online übermittelt werden. In einer geeigneten Ausgestaltung hierfür weist wenigstens eine Teilmenge (ein oder mehrere), insbesondere jede, der Papierrollen eine insbesondere individuelle ID auf (auch als Identifier oder Identifikationsmarke bezeichnet), welche gemeinsam mit den Papierdaten der jeweiligen Papierrolle in einer Datenbank, z.B. einem Datalake, gespeichert ist. Die Datenbank ist in einer geeigneten Ausgestaltung Teil einer Cloud. Mittels der ID erfolgt eine Zuordnung einer bestimmten Papierrolle zu deren Papierdaten, welche dann unabhängig von der Papierrolle ermittelt und/oder gespeichert werden. Die Nutzung einer ID zur Zuordnung einer Papierrolle zu einem Datensatz einer Menge von mehreren aggregierten Datensätzen wurde weiter oben bereits skizziert. Die Datenbank ist in einer geeigneten Ausgestaltung separat zur Wellpappenanlage ausgebildet und mit dieser zur Datenübertragung verbunden, z.B. über das Internet oder über ein anderes Netzwerk. Geeignet ist auch eine Ausgestaltung, bei welcher die Datenbank ein Teil der Wellpappenanlage ist. Die Datenbank ist entweder nur mit einer einzigen Wellpappenanlage oder alternativ mit mehreren Wellpappenanlagen verbunden. Die Wellpappenanlage fordert die Papierdaten einer jeweiligen Papierrolle anhand von deren ID aus der Datenbank an. Sobald die Wellpappenanlage die Werte empfangen hat, werden entsprechend die Betriebsparamater eingestellt. Grundsätzlich ist es auch möglich, dass auch die hierbei gegebenenfalls verwendete Vorschrift in der Datenbank gespeichert ist und diese bei einer Anforderung der Wellpappenanlage zu einer gegebenen ID dann direkt die zugehörigen Werte für die Betriebsparameter übermittelt. Auch bei der online-Lösung werden die Papierparameter somit direkt zur Steuerung der Wellpappenanlage genutzt, die ID stellt lediglich einen Pointer in die Datenbank dar, um den entsprechenden Datensatz, welcher nicht unmittelbar an der Papierrolle selbst angebracht ist, anzufordern. Die ID ist hingegen vorteilhafterweise an der Papierrolle angebracht, entsprechend gelten die Ausführungen zum Datenträger analog auch für die ID.

Vorteilhaft ist auch eine bi-direktionale Schnittstelle zwischen der Wellpappenanlage und einer Papiermaschine (oder allgemein Papierfabrik). Über die bi-direktionale Schnittstelle werden dann einerseits Papierdaten an die Wellpappenanlage übertragen, um diese wie beschrieben zu steuern. Andererseits werden über die bi-direktionale Schnittstelle auch umgekehrt Wellpappendaten an die Papiermaschine übertragen, um diese zu steuern. In einer geeigneten Ausgestaltung ist eine im Grunde symmetrische Konstellation realisiert, bei welcher die Wellpappendaten analog zu den Papierdaten Wellpappenparameter der Wellpappe enthalten und somit Eigenschaften der Wellpappe beschreiben. Die im Zusammenhang mit den Papierdaten genannten Papierparameter sind grundsätzlich analog auch als Wellpappenparameter geeignet. Alternativ oder zusätzlich wellpappenspezifische Wellpappenparameter wie z.B. warp oder Qualität der Verleimung werden vorteilhaft genutzt. Mit den Wellpappendaten wird dann die Papiermaschine gesteuert, auch hier gelten die Ausführungen zur Steuerung der Wellpappenanlage analog auch für die Steuerung der Papiermaschine, wobei im Detail die Papiermaschine konsequenterweise mit anderen Betriebsparametern gesteuert wird als eine Wellpappenanlage. Ein Vorteil der bi-direktionalen Schnittstelle ist insbesondere, dass Fehlbildungen und Ausschuss in der Wellpappenanlage mit Papierdaten der dort verarbeiteten Papierrolle korreliert werden und an die Papiermaschine zurückgemeldet werden, woraufhin diese eine entsprechend geeignete Korrektur vornimmt (d.h. Betriebsparameter geeignet ändert), um fortan Papier herzustellen, welches nicht oder zumindest in weniger zu den genannten Fehlbildungen oder Ausschuss führt. Mit anderen Worten: die Papiermaschine erhält ein Feedback hinsichtlich der Eignung des Papiers, welches mit der Papiermaschine hergestellt wird, und abhängig von diesem Feedback werden die Betriebsparameter der Papiermaschine optimiert, mit dem Ziel, die anschließende Herstellung von Wellpappe zu verbessern.

In einer zweckmäßigen Ausgestaltung weist die Wellpappenanlage einen oder mehrere Sensoren auf, mittels welchen die Werte der Papierparameter des Papiers einer jeweiligen Papierrolle insbesondere im Betrieb gemessen werden, während diese Papierrolle in der Wellpappenanlage aufgenommen ist und vorzugsweise noch bevor diese Papierrolle verarbeitet wird. Dies ist ebenfalls eine online-Lösung. Die Verarbeitung beginnt gemäß der diesseitigen Auslegung bereits mit dem Abrollen von einem Abroller der Wellpappenanlage und umfasst insbesondere auch einen oder mehrere der folgenden Verarbeitungsschritte: Splicen, Wellen (mit einer Riffelwalze), Befeuchten, Trocknen, Bedrucken sowie Verkleben und/oder Verbinden mit einer anderen Papierbahn. Grundsätzlich profitieren sämtliche Verarbeitungsschritte von einer Kenntnis der tatsächlichen Werte der Papierparameter, besonders jedoch jegliche Verarbeitungsschritte nach dem Abrollen oder nach dem Splicen. Entsprechend ist es ausreichend, wenn die Sensoren entlang der Papierbahn stromab des Abrollers oder des Splicers und stromauf jeglicher anderer Bearbeitungseinheiten angeordnet sind. Vorteilhaft ist auch eine Integration der Sensoren in den Abroller oder Splicer, sodass die Werte der Papierparameter unmittelbar vor oder bei oder nach dem Abrollen/Splicen gemessen werden.

Alternativ oder zusätzlich zu einem oder mehreren tatsächlichen Sensoren wie oben beschrieben weist die Wellpappenanlage in einer vorteilhaften Ausgestaltung einen virtuellen Sensor auf, auch als Softsensor bezeichnet. Der virtuelle Sensor führt in der Wellpappenanlage tatsächlich keine Messung aus, stattdessen werden dem virtuellen Sensor die Papierdaten zugeführt, speziell diejenigen Papierparameter, welche außerhalb der Wellpappenanlage ermittelt wurden (z.B. bereits bei der Herstellung des Papiers). Optional werden dem virtuellen Sensor auch ein oder mehrere Papierparameter zugeführt, welche wie beschrieben mit einem tatsächlichen Sensor in der Wellpappenanlage ermittelt wurden. Besonders vorteilhaft ist auch eine Ausgestaltung, bei welcher dem virtuellen Sensor die bereits genannten Papierherstellungsprozessparameter zugeführt werden, da diese prinzipbedingt nicht in der Wellpappenanlage selbst messbar sind. Der virtuelle Sensor bestimmt dann insbesondere aus den zugeführten Papierdaten die Betriebsparameter für die Wellpappenanlage und setzt insofern den bereits genannten Big-Data-Ansatz und/oder die bereits beschriebene Vorschrift zur Zuordnung der Werte der Betriebsparameter zu den Werten der Papierparameter um.

Eine erfindungsgemäße Wellpappenanlage weist eine Steuereinheit auf, welche ausgebildet ist zur Durchführung eines Verfahrens wie vorstehend beschrieben. Die Steuereinheit ist insbesondere ausgebildet einen oder mehrere der beschriebenen Schritte des Verfahrens auszuführen. Hierzu steuert die Steuereinheit die Bearbeitungseinheiten entsprechend an und stellt damit die Betriebsparameter ein.

Geeigneterweise weist die Wellpappenanlage ein Auftragsplanungssystem auf. Mit dem Auftragsplanungssystem wird die Einstellung der Betriebsparameter vorausschauend geplant. Dies wird durch die nun verfügbaren individuellen Werte der Papierparameter für eine jeweilige Papierrolle entsprechend verbessert. Das Auftragsplanungsystem fragt insbesondere die Papierdaten einer jeweiligen Papierrolle an, z.B. mittels eines Lesegeräts oder mittels einer ID, und gibt diese Papierdaten an die Steuereinheit weiter, welche dann die Betriebsparameter und somit die einzelnen Bearbeitungseinheiten geeignet einstellt, insbesondere sobald die jeweilige Papierrolle verarbeitet wird.

Ein erfindungsgemäßes Computerprogrammprodukt umfasst Befehle, welche bei Ausführung durch eine Wellpappenanlage, insbesondere wie vorstehend beschrieben, diese veranlassen, in einem Verfahren wie vorstehend beschrieben die Betriebsparameter jeweils abhängig von den Werten der Papierparameter auszuwählen und einzustellen, sodass die Herstellung der Wellpappenbahn jeweils individuell an das Papier der jeweils zugeführten Papierrolle angepasst wird. Insbesondere ist auch die bereits erwähnte Vorschrift zur Zuordnung der Werte der Betriebsparameter zu den Werten der Papierparameter mit dem Computerprogrammprodukt implementiert. Geeigneterweise umfasst das Computerprogrammprodukt auch Befehle, welche bei Ausführung durch eine Wellpappenanlage für diese das genannte Auftragsplanungssystem realisieren.

Eine vorteilhafte Papierrolle dient insbesondere zur Herstellung einer Wellpappenbahn und ist wie oben beschrieben durch eine Anzahl an Papierparametern mit individuellen Werten charakterisiert. Die Papierrolle weist einen Datenträger auf, auf welchem die individuellen Werte der Papierparameter gespeichert sind. Der Datenträger ist derart ausgebildet, dass dieser von einer Wellpappenanlage in einem Verfahren wie oben beschrieben auslesbar ist, insbesondere um dann basierend auf den Werten der Papierparameter die Wellpappenanlage zu steuern. Alternativ oder zusätzlich weist die Papierrolle eine ID auf, zum Verweis auf die Werte der Papierparameter in einer Datenbank. Die ID ist ausgebildet, als Pointer zum Anfordern der Werte der Papierparameter aus der Datenbank mittels einer Wellpappenanlage in einem Verfahren wie vorstehend beschrieben zu dienen.

Nachfolgend werden Ausführungsbeispiele der Erfindung anhand einer Zeichnung näher erläutert. Darin zeigen jeweils schematisch:
Fig. 1 eine Wellpappenanlage,
Fig. 2 eine Variante der Wellpappenanlage aus Fig. 1.

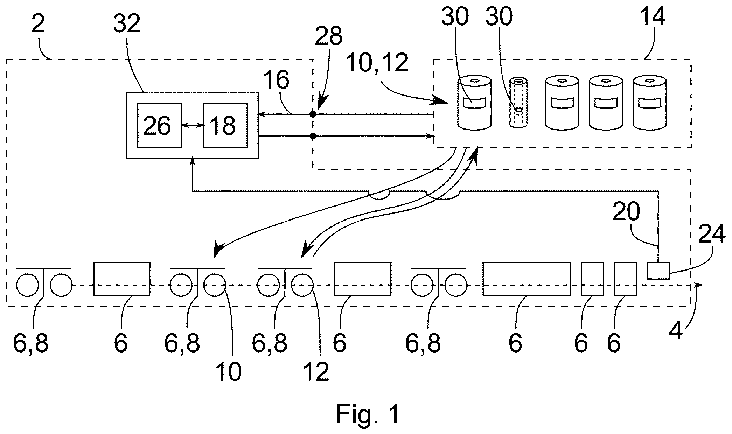

Die Fig. 1 und 2 zeigen jeweils eine Wellpappenanlage 2 zur Erläuterung von Ausführungsbeispielen für ein Verfahren zum Betrieb einer solchen Wellpappenanlage 2. Die Wellpappenanlage 2 dient zur Herstellung einer Wellpappenbahn 4 und weist hierzu eine Anzahl von einstellbaren Betriebsparametern 6 auf. Unter "eine Anzahl von" wird hier und auch ganz allgemein "ein oder mehrere" oder "zumindest ein/eine" verstanden. Das Einstellen eines Betriebsparameters 6 erfolgt durch Auswählen und Setzen eines Werts für diesen Betriebsparameter 6. Mittels der Betriebsparameter 6 wird das Verhalten einer oder mehrerer Bearbeitungseinheiten 8 der Wellpappenanlage 2 gesteuert. Beispiele für die Bearbeitungseinheiten 8 sind Abroller 10, Splicer, Drucker, Single Facer, Brücke, Vorheizer, Leimwerk, Double Facer, Trockenstrecke, Schneideinheit, Schlitzeinheit, Rilleinheit und dergleichen.

Im Rahmen des Verfahrens wird der Wellpappenanlage 2 eine Anzahl an Papierrollen 12 zugeführt, jeweils mit einer Papierbahn aus Papier, aus welchem die Wellpappenbahn 4 hergestellt wird. Eine jeweilige Papierrolle 12 ist durch eine aufgerollte Papierbahn gebildet, welche von der Wellpappenanlage 2 zur Herstellung der Wellpappenbahn 4 mittels eines Abrollers 10 abgerollt wird und mit weiteren Papierbahnen weiterer Papierrollen 12 geeignet verbunden wird. Die Bearbeitungseinheiten 8 verarbeiten dann die Papierbahnen gemäß den Betriebsparametern 6. In den Figuren sind der Verlauf der Papierbahnen und der Wellpappenbahn 4 durch die Wellpappenanlage 2 lediglich stark vereinfacht dargestellt.

Die Papierrollen 12 sind jeweils durch eine Anzahl an Papierparametern 14 charakterisiert, welche für jede einzelne der Papierrollen 12 individuelle Werte aufweisen, sodass jede der Papierrollen 12 anhand von deren Werten für die Papierparameter 14 (auch als Papierdaten bezeichnet) individuell charakterisiert ist. Die Papierparameter 14 beschreiben jeweils mittelbar oder unmittelbar eine oder mehrere Eigenschaften des Papiers der Papierrolle 12, sodass unterschiedliche Werte entsprechend unterschiedliche Eigenschaften bedeuten oder implizieren. In aller Regel unterscheiden sich zwei Papierrollen 12 aufgrund von deren Herstellung, Lagerung, Transport usw. in einem oder mehreren der Papierparameter 14. Diese Individualität der Papierrollen 12 wird vorliegend bei deren Verarbeitung berücksichtigt und genutzt, um die Herstellung der Wellpappenbahn 4 zu optimieren. Hierzu werden die Betriebsparameter 6 abhängig von den Werten der Papierparameter 14 eingestellt, sodass die Herstellung der Wellpappenbahn 4 jeweils individuell an die jeweilige Papierrolle 12 angepasst wird. Vorliegend werden demnach die individuellen Papierdaten einer Papierrolle 12 zur Steuerung der Wellpappenanlage 2 verwendet, sodass deren Betrieb dann abhängig ist von den individuellen Werten der Papierparameter 14 einer jeweiligen Papierrolle 12. Die verwendeten Werte der Papierparameter 14 einer einzelnen Papierrolle 12 werden vorliegend möglichst aggregiert, d.h. zu einem Datensatz 16 zusammengefasst.

In den gezeigten Ausführungsbeispielen werden Werte für die Betriebsparameter 6 anhand einer Vorschrift 18 ausgewählt, welche die Werte der Papierparameter 14 mit den Werten für die Betriebsparameter 6 derart verknüpft, dass ein Qualitätsmaß für die Wellpappenbahn 4 maximiert wird. Die Vorschrift 18 ist beispielsweise angelernt, d.h. wird vorab in einem Lernverfahren erzeugt, bei welchem der Zusammenhang zwischen dem Betriebsparameter 6 und dem Papierparameter 14 ermittelt wird und die Vorschrift 18 dann unmittelbar aus diesen Daten oder mittelbar über eine aus diesen abgeleiteten Funktion bestimmt wird.

Vorliegend werden die Betriebsparameter 6 zudem nicht nur mittelbar, sondern unmittelbar abhängig von den Werten der Papierparameter 14 eingestellt. Die Vorschrift 18 ist hierbei beispielsweise eine Funktion, welche die Papierparameter 14 als Eingangsparameter aufweist und die Betriebsparameter 6 entsprechend als Ausgangsparameter. Die Werte der Papierparameter 14 werden von der Wellpappenanlage 2 gemäß der Vorschrift 18 in geeignete Werte für die Betriebsparameter 6 umgesetzt und diese Werte werden dann auch eingestellt. Eine Bestimmung irgendwelcher Zwischenparameter erfolgt vorzugsweise nicht.

Welche Papierparameter 14 konkret genutzt werden, ist zunächst von untergeordneter Bedeutung und wird mit zunehmender Anzahl an Papierparametern 14 auch weniger relevant. Entsprechend werden vorliegend so viele Papierparameter 14 wie möglich verwendet, z.B. wenigstens 10 oder sogar wenigstens 100. Einige Papierparamater 14 haben jedoch regelmäßig einen größeren Einfluss auf die Qualität der Wellpappenbahn 4 als andere Papierparameter 14 und werden daher in einer möglichen Ausgestaltung gezielt verwendet. Beispielsweise sind hierbei einer oder mehrere der Papierparameter 14 ausgewählt aus den folgenden Papierparametern 14: Faserausrichtung des Papiers der Papierrolle, Versagensspannung des Papiers der Papierrolle 12.

In einer möglichen Ausgestaltung ist zumindest einer der Papierparameter 14 ein dynamischer Papierparameter 14, dessen Werte als Funktion der Breite und/oder Länge der Papierbahn der Papierrolle 12 angegeben sind. Demgegenüber weisen statische Papierparameter 14 entlang der gesamten Papierbahn der Papierrolle 12 denselben Wert auf. Geeignete dynamische Papierparameter 14 sind Feuchtigkeit und Temperatur als Funktion einer Breite und/oder Länge der Papierbahn der Papierrolle 12.

Alternativ oder zusätzlich umfassen die Papierparameter 14 eine Anzahl von Papierherstellungsprozessparametern, welche bei der Herstellung 20 des Papiers der Papierrolle 12 verwendet wurden. Die Papierherstellungsprozessparameter sind Betriebsparameter einer Papiermaschine einer Papierfabrik zur Herstellung 20 der Papierrolle 12 oder zumindest zur Herstellung des Papiers für die Papierrolle 12.

In den hier gezeigten Ausführungsbeispiel wurden einige oder alle der Werte der Papierparameter 14 einer jeweiligen Papierrolle 12 im Voraus ermittelt, nämlich bevor diese Papierrolle 12 der Wellpappenanlage 2 zugeführt wird. Die Werte der Papierparameter 14 sind somit noch vor einer Beschickung der Wellpappenanlage 2 mit der Papierrolle 12 bekannt und brauchen demnach lediglich an die Wellpappenanlage 2 übermittelt werden, um die Betriebsparameter 6 einzustellen.

Zudem wurden zumindest einige der Werte der Papierparameter 14 einer jeweiligen Papierrolle 12 bereits bei deren Herstellung 20 ermittelt, speziell im Falle der oben genannten Papierherstellungsprozessparameter. Alternativ oder zusätzlich wurden die Werte der Papierparameter 14 einer jeweiligen Papierrolle 12 nach deren Herstellung 20 und z.B. mittels einer Laboruntersuchung 22 ermittelt. Beispielsweise werden bereits bei oder unmittelbar nach der Herstellung 20 und gegebenenfalls noch vom Hersteller der Papierrolle 12 selbst deren Papierparameter 14 bestimmt und gespeichert.

Die Wellpappenanlage 2 weist in den gezeigten Ausführungsbeispielen eine Datenschnittstelle 24 auf, über welche die Werte der Papierparameter 14 einer jeweiligen Papierrolle 12 an die Wellpappenanlage 2 übermittelt werden. Die Werte werden vor, während und/oder nach der Beschickung der Wellpappenanlage 2 übermittelt, z.B. noch bevor die Papierrolle 12 zur Verarbeitung abgerollt wird.

In dem Ausführungsbeispiel der Fig. 1 ist jeder Papierrolle 12 ein Datenträger 26 zugeordnet, auf welchem die individuellen Werte der Papierparameter 14 der jeweiligen Papierrolle 12 gespeichert sind. Ein jeweiliger Datenträger 14 ist genau einer Papierrolle 12 zugeordnet und enthält hier auch lediglich die Werte einer einzelnen Papierrolle 12. Zum Einstellen der Betriebsparameter 6 abhängig von den Papierparametern 14 wird der Datenträger 26 von der Wellpappenanlage 2 ausgelesen. Hierzu weist die Wellpappenanlage 2 ein geeignetes Lesegerät 28 auf. Durch den Datenträger 26 wird eine offline-Lösung realisiert, bei welcher die Werte der Papierparameter 14 an die Wellpappenanlage 2 übertragen werden, ohne dass diese mit dem Internet oder einem anderen Netzwerk verbunden sein muss, um den Datensatz 16 zu einer jeweiligen Papierrolle 12 zu empfangen. Der Datenträger 26 ist mit der Papierrolle 12 versendbar und sozusagen ein Etikett oder eine Art Datenblatt für die Papierrolle 12. In der hier gezeigten Ausgestaltung ist der Datenträger 26 an der Papierrolle 12 angebracht.

Alternativ oder zusätzlich zur offline-Lösung ist auch eine online-Lösung grundsätzlich vorteilhaft. Ein Ausführungsbeispiel hierfür ist in Fig. 2 gezeigt. Dort weist jede der Papierrollen 12 eine ID 30 auf, welche gemeinsam mit den Werten der Papierparameter 14 der jeweiligen Papierrolle 12 in einer Datenbank 32 gespeichert sind. Die ID 30 ist beispielsweise auf dieselbe Weise an der Papierrolle angebracht wie der Datenträger 26 in Fig. 1. Die Datenbank 32 ist entweder wie in Fig. 2 gezeigt separat zur Wellpappenanlage 2 ausgebildet oder ein Teil davon (nicht gezeigt). Die Wellpappenanlage 2 fordert die Werte der Papierparameter 14 einer jeweiligen Papierrolle 12 anhand von deren ID 30 aus der Datenbank 32 an. Sobald die Wellpappenanlage 2 die Werte empfangen hat, werden entsprechend die Betriebsparamater 6 eingestellt. Grundsätzlich ist es auch möglich, dass auch die hierbei gegebenenfalls verwendete Vorschrift 18 in der Datenbank 32 gespeichert ist und diese bei einer Anforderung der Wellpappenanlage 2 zu einer gegebenen ID 30 dann direkt die zugehörigen Werte für die Betriebsparameter 6 übermittelt. Auch bei der online-Lösung werden die Papierparameter 14 somit direkt zur Steuerung der Wellpappenanlage 2 genutzt, die ID 30 stellt lediglich einen virtuellen Platzhalter für die Papierrolle 12 und deren Papierdaten dar, um den zugehörigen Datensatz 16 anzufragen.

Im Ausführungsbeispiel der Fig. 1 weist die Wellpappenanlage 2 einen oder mehrere Sensoren 34 auf, mittels welchen einige der Werte der Papierparameter 14 einer jeweiligen Papierrolle 12 im Betrieb gemessen werden. Diese Papierrolle 12 ist dabei in der Wellpappenanlage 2 bereits aufgenommen. Dies ist ebenfalls eine online-Lösung. Die Verarbeitung beginnt im Grunde bereits mit dem Abrollen vom Abroller 10 und umfasst dann sämtliche darauffolgenden Verarbeitungsschritte. Grundsätzlich profitieren sämtliche Verarbeitungsschritte von einer Kenntnis der tatsächlichen Werte der Papierparameter 14, besonders jedoch jegliche Verarbeitungsschritte nach dem Abrollen oder nach dem Splicen. Entsprechend ist es anders als in Fig. 1 gezeigt ausreichend, wenn die Sensoren 34 entlang der Papierbahn stromab des Abrollers 10 oder des Splicers und stromauf jeglicher anderer Bearbeitungseinheiten 8 angeordnet sind. Die Lösung mit einem oder mehreren Sensoren 34 ist auch auf das Ausführungsbeispiel der Fig. 2 anwendbar.

Die jeweilige Wellpappenanlage 2 weist zudem eine Steuereinheit 36 auf, welche ausgebildet ist zur Durchführung des beschriebenen Verfahrens. Die Steuereinheit 36 steuert die Bearbeitungseinheiten 8 entsprechend an und stellt damit die Betriebsparameter 6 ein. Weiter weist die Wellpappenanlage 2 in Fig. 2 auch noch ein Auftragsplanungssystem 38 auf, mit welchem die Einstellung der Betriebsparameter 6 vorausschauend geplant wird. Das Auftragsplanungsystem 38 fragt beispielsweise wie in Fig. 2 gezeigt mittels der ID 30 einer jeweiligen Papierrolle 12 die Werte der Papierparameter 14 einer jeweiligen Papierrolle 12 aus der genutzten Datenbank 32 an und gibt diese an die Steuereinheit 36 weiter, welche dann die Betriebsparameter 6 und somit die einzelnen Bearbeitungseinheiten 8 einstellt, sobald die jeweilige Papierrolle 12 verarbeitet wird. Ein Auftragsplanungsystem 38 ist auch bei der Ausgestaltung gemäß Fig. 1 möglich.

Die hier jeweils gezeigte Wellpappenanlage 2 führt zum Betrieb auch ein Computerprogrammprodukt aus, mit Befehlen, welche die Wellpappenanlage 2 veranlassen, in dem beschriebenen Verfahren die Betriebsparameter 6 wie beschrieben jeweils abhängig von den Werten der Papierparameter 14 auszuwählen und einzustellen, sodass die Herstellung der Wellpappenbahn 2 jeweils individuell an die jeweils zugeführte Papierrolle 12 angepasst wird.

Einzelne Aspekte, welche lediglich im Zusammenhang mit einem der Ausführungsbeispiele beschrieben oder gezeigt sind, sind grundsätzlich unabhängig von den übrigen in dem betreffenden Ausführungsbeispiel enthaltenen Konzepten auch auf die anderen Ausführungsbeispiele übertragbar.

### Bezugszeichenliste

- 2: Wellpappenanlage
- 4: Wellpappenbahn
- 6: Betriebsparameter
- 8: Bearbeitungseinheit
- 10: Abroller
- 12: Papierrolle
- 14: Papierparameter
- 16: Datensatz
- 18: Vorschrift
- 20: Herstellung (der Papierrolle)
- 22: Laboruntersuchung
- 24: Datenschnittstelle
- 26: Datenträger
- 28: Lesegerät
- 30: ID
- 32: Datenbank
- 34: Sensor
- 36: Steuereinheit
- 38: Auftragsplanungssystem

## Patentansprüche

1. Verfahren zur Herstellung einer Wellpappenbahn (4) mittels einer Wellpappenanlage (2),
- wobei mehrere Papierrollen (10, 12) bereitgestellt werden, jeweils mit einer Papierbahn aus Papier,
- wobei die Papierrollen (10, 12) jeweils durch eine Anzahl an Papierparametern (16) charakterisiert sind, welche für jede der Papierrollen (10, 12) individuelle Werte aufweisen, sodass jede der Papierrollen (10, 12) anhand von deren Werten für die Papierparameter (16) individuell charakterisiert ist,
- wobei eine Zuordnungsvorschrift (18) bereitgestellt wird, welche die Papierparameter (16) zweier Papierrollen (10, 12) mit einem Qualitätsparameter (20) verknüpft, welcher sich für die Herstellung der Wellpappenbahn (4) bei einer Kombination dieser zwei Papierrollen (10, 12) ergibt,
- wobei mithilfe der Zuordnungsvorschrift (18) aus den Papierrollen (10, 12) eine erste Papierrolle (10) und eine zweite Papierrolle (12) derart ausgewählt werden, dass der Qualitätsparameter (20) optimiert wird,
- wobei die Zuordnungsvorschrift (18) derart ausgebildet ist und der Qualitätsparameter (20) derart ausgewählt ist, dass dieser durch eine Kombination solcher Papierrollen (10, 12) optimiert wird, deren Papierparameter (16) sich gegenseitig ausgleichen,
- wobei die Wellpappenbahn (4) hergestellt wird, indem die erste und die zweite Papierrolle (10, 12) der Wellpappenanlage (2) zugeführt werden, welche dann die Papierbahnen dieser ersten und zweiten Papierrolle (10, 12) miteinander verbindet.

2. Verfahren nach Anspruch 1,
wobei der Qualitätsparameter (20) ein Wellpappenparameter ist, nämlich ein Ausmaß eines Verbiegens der Wellpappenbahn (4), auch als "warp" bezeichnet.

3. Verfahren nach einem der Ansprüche 1 oder 2,
wobei der Qualitätsparameter (20) eine Variation eines Betriebsparameters der Wellpappenanlage (2) während der Herstellung der Wellpappenbahn (4) ist oder von einer solchen Variation abhängig ist.

4. Verfahren nach einem der Ansprüche 1 bis 3,
wobei unter "ausgleichen" verstanden wird,
dass die zwei Werte eines Papierparameters (16) zweier Papierrollen (10, 12) den gleichen Absolutbetrag aufweisen, jedoch entgegengesetztes Vorzeichen,
oder
dass die Abstände der Werte jeweils zu einem Sollwert gleich sind
oder
dass die Differenz zweier Werte eine Maximaldifferenz nicht überschreitet.

5. Verfahren nach einem der Ansprüche 1 bis 4,
wobei einer der Papierparameter (16) einer jeweiligen Papierrolle (10, 12) eine Feuchtigkeit ist und der Qualitätsparameter (20) ein Maß für einen Unterschied der Feuchtigkeiten.

6. Verfahren nach einem der Ansprüche 1 bis 5,
wobei bei oder nach der Herstellung der Wellpappenbahn (4) der Qualitätsparameter (20) für eine jeweilige Kombination zweier Papierrollen (10, 12) wiederkehrend gemessen wird und die Papierparameter (16) dieser zwei Papierrollen (10, 12) zusammen mit dem Qualitätsparameter (20) als historische Daten in einer Datenbank (26) gespeichert werden,
wobei die Zuordnungsvorschrift (18) auf den historischen Daten basiert.

7. Verfahren nach einem der Ansprüche 1 bis 6,
wobei die Papierbahnen der ersten und der zweiten Papierrolle (10, 12) unterschiedliche Lagen der Wellpappenbahn (4) bilden.

8. Verfahren nach einem der Ansprüche 1 bis 7,
wobei die Anzahl an Papierparametern (16) einer jeweiligen Papierrolle (10, 12) wenigstens 10 beträgt, vorzugsweise wenigstens 100.

9. Verfahren nach einem der Ansprüche 1 bis 8,
wobei einer oder mehrere der Papierparameter (16) ausgewählt sind aus den folgenden Papierparametern (16): Faserausrichtung des Papiers der Papierrolle (10, 12), Versagensspannung des Papiers der Papierrolle (10, 12).

10. Verfahren nach einem der Ansprüche 1 bis 9,
wobei zumindest einer der Papierparameter (16) ein dynamischer Papierparameter (16) ist, dessen Werte als Funktion einer Breite und/oder Länge der Papierbahn der Papierrolle (10, 12) angegeben sind.

11. Verfahren nach einem der Ansprüche 1 bis 10,
wobei die Papierparameter (16) eine Anzahl von Papierherstellungsprozessparametern umfassen, welche bei der Herstellung des Papiers einer jeweiligen Papierrolle (10, 12) verwendet wurden.

12. Verfahren nach einem der Ansprüche 1 bis 11,
wobei die Werte der Papierparameter (16) des Papiers einer jeweiligen Papierrolle (10, 12) ermittelt wurden bevor diese Papierrolle (10, 12) der Wellpappenanlage (2) zugeführt wird.

13. Verfahren nach einem der Ansprüche 1 bis 12,
wobei wenigstens eine Teilmenge, insbesondere jede, der Papierrollen (10, 12) eine ID aufweist, welche gemeinsam mit den Werten der Papierparameter (16) der jeweiligen Papierrolle (10, 12) in einer Datenbank (26) gespeichert ist,
wobei die Wellpappenanlage (2) die Werte der Papierparameter (16) einer jeweiligen Papierrolle (10, 12) anhand von deren ID aus der Datenbank (26) anfordert.

14. Wellpappenanlage (2), welche eine Steuereinheit (32) aufweist, welche ausgebildet ist zur Durchführung eines Verfahrens gemäß einem der Ansprüche 1 bis 13.

15. Computerprogrammprodukt, umfassend Befehle, welche bei Ausführung durch eine Wellpappenanlage (2) diese veranlassen, in einem Verfahren gemäß einem der Ansprüche 1 bis 13 zu einer ersten Papierrolle (10) mithilfe der Zuordnungsvorschrift (18) aus den mehreren Papierrollen (10, 12) eine zweite Papierrolle (12) derart auszuwählen, dass der Qualitätsparameter (20) optimiert wird.

## Claims

1. Method for producing a corrugated cardboard web (4) by means of a corrugator (2),
- wherein a plurality of paper rolls (10, 12) is provided, each comprising a paper web made of paper,
- wherein the paper rolls (10, 12) are each **characterized by** a number of paper parameters (16) which have individual values for each of the paper rolls (10, 12) such that each of the paper rolls (10, 12) is individually characterized on the basis of its values for the paper parameters (16),
- wherein an assignment rule (18) is provided which links the paper parameters (16) of two paper rolls (10, 12) to a quality parameter (20) which results for the production of the corrugated cardboard web (4) when these two paper rolls (10, 12) are combined,
- wherein a first paper roll (10) and a second paper roll (12) are selected from the paper rolls (10, 12) using the assignment rule (18) such that the quality parameter (20) is optimized,
- wherein the assignment rule (18) is designed such that and the quality parameter (20) is selected such that this quality parameter is optimized by a combination of such paper rolls (10, 12) for which the paper parameters (16) balance one another out,
- wherein the corrugated cardboard web (4) is produced by feeding the first and the second paper roll (10, 12) to the corrugator (2), which then joins the paper webs of these first and second paper rolls (10, 12) together.

2. Method according to claim 1,
wherein the quality parameter (20) is a corrugated cardboard parameter, namely an extent of bending of the corrugated cardboard web (4), also referred to as "warp."

3. Method according to either of claims 1 or 2,
wherein the quality parameter (20) is a variation of an operating parameter of the corrugator (2) during the production of the corrugated cardboard web (4) or is dependent on such a variation.

4. Method according to any of claims 1 to 3,
wherein "balance out" is understood to mean
that the two values of a paper parameter (16) of two paper rolls (10, 12) have the same absolute value but opposite signs,
or
that the distances between each of the values and a target value are equal
or
that the difference between two values does not exceed a maximum difference.

5. Method according to any of claims 1 to 4,
wherein one of the paper parameters (16) of each paper roll (10, 12) is a moisture content and the quality parameter (20) is a measure of a difference in moisture contents.

6. Method according to any of claims 1 to 5,
wherein during or after the production of the corrugated cardboard web (4), the quality parameter (20) is repeatedly measured for each combination of two paper rolls (10, 12) and the paper parameters (16) of these two paper rolls (10, 12) are stored together with the quality parameter (20) as historical data in a database (26),
wherein the assignment rule (18) is based on the historical data.

7. Method according to any of claims 1 to 6,
wherein the paper webs of the first and the second paper roll (10, 12) form different layers of the corrugated cardboard web (4).

8. Method according to any of claims 1 to 7,
wherein the number of paper parameters (16) of each paper roll (10, 12) is at least 10, preferably at least 100.

9. Method according to any of claims 1 to 8,
wherein one or more of the paper parameters (16) are selected from the following paper parameters (16): fiber orientation of the paper of the paper roll (10, 12), failure stress of the paper of the paper roll (10, 12).

10. Method according to any of claims 1 to 9,
wherein at least one of the paper parameters (16) is a dynamic paper parameter (16), the values of which are specified as a function of a width and/or length of the paper web of the paper roll (10, 12).

11. Method according to any of claims 1 to 10,
wherein the paper parameters (16) comprise a number of paper production process parameters which were used in the production of the paper of each paper roll (10, 12).

12. Method according to any of claims 1 to 11,
wherein the values for the paper parameters (16) of the paper of each paper roll (10, 12) are determined before this paper roll (10, 12) is fed to the corrugator (2).

13. Method according to any of claims 1 to 12,
wherein at least some, in particular each, of the paper rolls (10, 12) has an ID which is stored in a database (26) together with the values for the paper parameters (16) of each paper roll (10, 12),
wherein the corrugator (2) requests the values for the paper parameters (16) of each paper roll (10, 12) from the database (26) using its ID.

14. Corrugator (2) which has a control unit (32) designed to carry out a method according to any of claims 1 to 13.

15. Computer program product comprising commands which, when executed by a corrugator (2), cause the corrugator, in a method according to any of claims 1 to 13, to select a second paper roll (12) from the plurality of paper rolls (10, 12) with respect to a first paper roll (10) using the assignment rule (18) such that the quality parameter (20) is optimized.

## Revendications

1. Procédé permettant de fabriquer une bande de carton ondulé (4) par le biais d'une installation de fabrication de carton ondulé (2),
- dans lequel plusieurs rouleaux de papier (10, 12) sont fournis, lesquels comportent respectivement une bande de papier,
- dans lequel les rouleaux de papier (10, 12) sont respectivement **caractérisés par** un certain nombre de paramètres de papier (16) qui présentent des valeurs individuelles pour chacun des rouleaux de papier (10, 12), de sorte que chacun des rouleaux de papier (10, 12) est caractérisé individuellement à l'aide de ses valeurs pour les paramètres de papier (16),
- dans lequel une règle d'affectation (18) est fournie, laquelle associe les paramètres de papier (16) de deux rouleaux de papier (10, 12) à un paramètre de qualité (20) qui est obtenu lors d'une combinaison desdits deux rouleaux de papier (10, 12) pour la fabrication de la bande de carton ondulé (4),
- dans lequel, à l'aide de la règle d'affectation (18), un premier rouleau de papier (10) et un second rouleau de papier (12) sont sélectionnés parmi les rouleaux de papier (10, 12) de telle sorte que le paramètre de qualité (20) est optimisé,
- dans lequel la règle d'affectation (18) est configurée et le paramètre de qualité (20) est sélectionné de telle sorte que celui-ci est optimisé par une combinaison de rouleaux de papier (10, 12) dont les paramètres de papier (16) se compensent mutuellement,
- dans lequel la bande de carton ondulé (4) est fabriquée en acheminant le premier et le second rouleau de papier (10, 12) à l'installation de fabrication de carton ondulé (2), laquelle relie ensuite l'une à l'autre les bandes de papier desdits premier et second rouleaux de papier (10, 12).

2. Procédé selon la revendication 1,
dans lequel le paramètre de qualité (20) est un paramètre de carton ondulé, à savoir un degré de déformation de la bande de carton ondulé (4), également appelé « distorsion » (« warp »).

3. Procédé selon l'une des revendications 1 ou 2,
dans lequel le paramètre de qualité (20) est une variation d'un paramètre de fonctionnement de l'installation de fabrication de carton ondulé (2) pendant la fabrication de la bande de carton ondulé (4) ou dépend d'une telle variation.

4. Procédé selon l'une des revendications 1 à 3,
dans lequel on entend par « compenser »
le fait que les deux valeurs d'un paramètre de papier (16) de deux rouleaux de papier (10, 12) présentent la même valeur absolue, mais des signes opposés,
ou
le fait que les écarts entre les valeurs et une valeur de consigne sont égaux respectivement
ou
le fait que la différence entre deux valeurs ne dépasse pas une différence maximale.

5. Procédé selon l'une des revendications 1 à 4,
dans lequel l'un des paramètres de papier (16) d'un rouleau de papier (10, 12) respectif est une humidité et le paramètre de qualité (20) est une mesure pour une différence entre les humidités.

6. Procédé selon l'une des revendications 1 à 5,
dans lequel, pendant ou après la fabrication de la bande de carton ondulé (4), le paramètre de qualité (20) est mesuré de manière répétée pour une combinaison respective de deux rouleaux de papier (10, 12) et les paramètres de papier (16) desdits deux rouleaux de papier (10, 12) sont mémorisés conjointement avec le paramètre de qualité (20) en tant que données historiques dans une base de données (26),
dans lequel la règle d'affectation (18) est basée sur les données historiques.

7. Procédé selon l'une des revendications 1 à 6,
dans lequel les bandes de papier du premier et du second rouleau de papier (10, 12) forment des couches différentes de la bande de carton ondulé (4).

8. Procédé selon l'une des revendications 1 à 7,
dans lequel le nombre de paramètres de papier (16) d'un rouleau de papier (10, 12) respectif est d'au moins 10, de préférence d'au moins 100.

9. Procédé selon l'une des revendications 1 à 8,
dans lequel un ou plusieurs des paramètres de papier (16) sont sélectionnés parmi les paramètres de papier (16) suivants : orientation des fibres du papier du rouleau de papier (10, 12), contrainte de rupture du papier du rouleau de papier (10, 12).

10. Procédé selon l'une des revendications 1 à 9,
dans lequel au moins l'un des paramètres de papier (16) est un paramètre de papier (16) dynamique dont les valeurs sont données en fonction d'une largeur et/ou d'une longueur de la bande de papier du rouleau de papier (10, 12).

11. Procédé selon l'une des revendications 1 à 10,
dans lequel les paramètres de papier (16) comprennent un certain nombre de paramètres de processus de fabrication de papier qui ont été utilisés lors de la fabrication du papier d'un rouleau de papier (10, 12) respectif.

12. Procédé selon l'une des revendications 1 à 11,
dans lequel les valeurs des paramètres de papier (16) du papier d'un rouleau de papier (10, 12) respectif ont été déterminées avant que ledit rouleau de papier (10, 12) ne soit acheminé à l'installation de fabrication de carton ondulé (2).

13. Procédé selon l'une des revendications 1 à 12,
dans lequel au moins une quantité partielle, en particulier chaque rouleau, des rouleaux de papier (10, 12), présente un identifiant qui est mémorisé dans une base de données (26) conjointement avec les valeurs des paramètres de papier (16) du rouleau de papier (10, 12) respectif,
dans lequel l'installation de fabrication de carton ondulé (2) demande dans la base de données (26) les valeurs des paramètres de papier (16) d'un rouleau de papier (10, 12) respectif à l'aide de son identifiant.

14. Installation de fabrication de carton ondulé (2) qui présente une unité de commande (32) qui est configurée pour la mise en œuvre d'un procédé selon l'une des revendications 1 à 13.

15. Produit-programme informatique, comprenant des instructions qui, lorsqu'elles sont exécutées par une installation de fabrication de carton ondulé (2), amènent celle-ci à sélectionner, dans un procédé conformément à l'une des revendications 1 à 13, pour un premier rouleau de papier (10), à l'aide de la règle d'affectation (18), un second rouleau de papier (12) parmi les rouleaux de papier (10, 12), de telle sorte que le paramètre de qualité (20) est optimisé.
